# EUROPÄISCHE PATENTSCHRIFT

(11) **EP 0 508 192 B1**
(45) Veröffentlichungstag und Bekanntmachung des Hinweises auf die Patenterteilung: **09.08.1995**
(21) Anmeldenummer: 92104940.9
(22) Anmeldetag: 21.03.1992
(51) Int. Cl.: H02G 3/04

(54) **Installationskanal aus Metall zum Schutz von flexiblen Langformgütern**
Metallic installation channel for protecting flexible elongated elements
Canal d'installation en métal pour protéger des éléments flexibles de forme allongée

(30) Priorität: 09.04.1991 DE 4111536
(43) Veröffentlichungstag der Anmeldung: 14.10.1992
(73) Patentinhaber: PFLITSCH GmbH. & Co. KG., 42499 Hückeswagen (DE)
(72) Erfinder: Pflitsch, Harald, W-5608 Radevormwald-Dahlerau (DE)
(74) Vertreter: Patentanwälte Dipl.-Ing. Conrad Köchling Dipl.-Ing. Conrad-Joachim Köchling

(56) Entgegenhaltungen:
- DE-U- 8 125 700
- DE-U- 8 409 752
- US-A- 3 840 140

## Beschreibung

Die Erfindung betrifft einen Installationskanal aus Metall zum Schutz von Schläuchen, Leitungen, Kabeln und dergleichen flexiblen Langformgütern, bestehend aus rinnenförmigen Unterteilen und auf diese aufrastbaren Deckelteilen, die den Kanal zu einer rechteckigen, geschlossenen Querschnittsform ergänzen, wobei die aus Unterteil und Deckelteil bestehenden Teilabschnitte auf Stoß verlegt sind.

Derartige Installationskanäle sind bekannt. Sie werden beispielsweise in den Abmessungen 15 x 15, 30 x 30, 40 x 40 und 60 x 60 mm bei jeweils 2 m Länge der Kanalteilstücke geliefert. Mittels solcher kleindimensionierten Installationskanäle aus Metall können einzelne flexible Langformgüter, beispielsweise Schläuche, Leitungen oder auch Kabel stabil und formschön sicher geschützt und von außen einlegbar installiert werden.

Beispielsweise werden auf diese Weise Installationsmaterialien von Versorgungsstationen zu einzelnen Arbeitsstationen von Maschinen geführt. Die Profilteilstücke werden auf Stoß montiert. Nach dem Einlegen der entsprechenden flexiblen Langformgüter wird das Deckelteil aufgerastet, so daß ein geschlossener Installationskanal entsteht. Sofern später die Installation geändert oder ergänzt werden soll, kann der Deckel abgehoben werden, so daß der Innenraum des Installationskanals zugänglich ist.
Bei solchen Installationskanälen besteht das Problem, daß dann, wenn ein Kanal auf eine gewünschte Länge verkürzt werden muß, dies zwar in einfacher Form durch Einsatz eines üblichen Trennwerkzeuges, beispielsweise eines Trennmessers oder dergleichen erfolgen kann, jedoch an den Kanalkanten und auch am Kanaldeckel, der mitgeschnitten wird, Schneidgrate entstehen, die zu einer Beschädigung der in dem Kanal verlegten flexiblen Langformgüter führen können. Demzufolge muß das Montagepersonal äußerst sorgfältig darauf achten, daß entsprechende Schneidgrate sauber entfernt werden, so daß Beschädigungen der flexiblen Langformgüter nicht erfolgen können.
Desweiteren ist auch bei der üblicherweise erfolgenden Stoßverlegung der einzelnen Kanalabschnitte eine gewisse Gefahr darin zu sehen, daß die relativ scharfen Kanten des Metallkanals an den Stoßstellen zu Beschädigungen des eingelegten Installationsmaterials führen können.

Ausgehend von diesem Stand der Technik liegt der Erfindung die Aufgabe zugrunde, einen Installationskanal gattungsgemäßer Art zu schaffen, bei dem bei weiterhin einfacher Verlegung die Gefahr von Beschädigungen der eingelegten Installationsmaterialien an den Stoßkanten, insbesondere auch an geschnittenen Stoßkanten nicht mehr besteht.

Zur Lösung dieser Aufgabe wird vorgeschlagen, daß auf die Stoßkante eines Teilabschnittes ein Kantenschutzprofil aus Kunststoff aufsteckbar ist, welches eine umlaufende Einschubnut zur Aufnahme der Randkante des Teilabschnitts aufweist.

Das Kantenschutzprofil kann beispielsweise aus ABS bestehen, wobei der Einsatz von flammwidrigem Kunststoff bevorzugt ist.
Durch die Anordnung eines solchen Kantenschutzprofiles auf der Stoßkante eines Teilabschnittes ist gewährleistet, daß die scharfe Kante durch dieses Kantenschutzprofil abgedeckt ist, so daß eingelegte Installationsmaterialien nicht beschädigt werden können. Besonders wichtig ist dies an solchen Stoßkanten, die bei der Verlegung geschnitten werden müssen, so daß an diesen Kanten Grate entstehen.

Eine bevorzugte Ausbildung wird darin gesehen, daß das Kantenschutzprofil aus einem in der Stoßebene des Teilabschnitts angeordneten ebenen Basisteil besteht, welches als der Stirnfläche des Teilabschnitts an der Stoßstelle entspricht, daß am Basisteil umlaufend eine die Wandung des Teilabschnitts an der Stoßstelle von außen übergreifende Lippe angeformt ist und eine Stützlippe gleichgerichtet dazu am Basisteil angeformt ist, die innenseitig in den Teilabschnitt einsetzbar ist und dessen innerer Kontur folgend geformt ist.

Durch die Anordnung der Lippe und der Stützlippe wird die umlaufende Einschubnut gebildet, die die Randkante des entsprechenden Profilteilabschnittes sicher abdeckt. Es ist gegebenenfalls auch möglich, auf beide Teilabschnitte einer Stoßstelle solche Kantenschutzprofile aufzubringen, oder aber ein Kantenschutzprofil mit nach beiden Seiten abragenden Lippen und Stützlippen auszustatten, so daß beidseitig des Profiles eines Einschubnut für die Stirnrandkante des Teilabschnittes gebildet ist.
Eine bevorzugte Weiterbildung wird ferner darin gesehen, daß an mindestens der Lippe oder der Stützlippe in den von diesen begrenzten, die Einschubnut bildenden Spalt hineinragende Klemmrippen angeformt sind. Dabei ist bevorzugt vorgesehen, daß die Klemmrippen sich parallel zur Aufsteckrichtung des Kantenschutzprofils erstrecken.

Ferner ist bevorzugt, daß die Klemmrippen im oberen, die Deckelrandkante untergreifenden Bereich und im seitlichen oder auch im unteren die Randkante des Unterteils untergreifenden Bereich ausgebildet sind, jedoch der die Rastung zwischen Deckel und Unterteil umfassende Bereich frei von Klemmrippen ist.

Besonders bevorzugt ist dabei, daß die Klemmrippen an einem Bereich der Stützlippe angeformt sind, der axial über die axiale Erstreckung der äußeren Lippe vorsteht.

Die Anordnung der zusätzlichen Klemmrippen führt dazu, daß einerseits die Kanalkanten auch dann wenn sie mit einem Schneidgrat versehen sind, sich in die Nut eingeschoben und aufgenommen werden können, also zwischen der Lippe und der Stützlippe angeordnet sind, so daß Kabel und Leitungen nicht beschädigt sind, andererseits aber auch eine ausreichende und gute Klemmung des Kantenschutzprofiles auf den Kanalteilstück erreicht wird, indem die axial gerichteten Klemmrippen sich unter materialeigener Federelastizität von innenseitig oder auch von außenseitig gegen den entsprechenden Wandungsabschnitt des Kanalteilstückes anlegen.

Zum Zwecke der erleichterten Einführung ist ferner vorgesehen, daß die freien Enden der die Einschubnut bildenden Lippe und Stützlippe angeschrägt oder gerundet sind.

Ein solches Kantenschutzprofil kann dann, wenn das Basisteil vollflächig aus Kunststoffmaterial geformt ist, als Endkappe benutzt werden. Sofern die Ausbildung so getroffen ist, daß der zwischen der inneren umlaufenden Stützlippe befindliche Bereich des Basisteils des Kantenschutzprofils entfernt oder entfernbar ist, so kann der Mittelbereich entfernt oder ausgestoßen werden, sofern dieser vorher angeformt gewesen ist, um das Kantenschutzprofil so auszubilden, daß es von den entsprechenden Installationsleitungen und dergleichen durchgriffen werden kann, die in den Kanal eingelegt sind, oder aber das Kantenschutzprofil kann von vornherein so hergestellt sein, daß es einen entsprechenden Durchgriffsbereich aufweist.

Desweiteren ist vorteilhaft, wenn der zwischen der inneren umlaufenden Stützlippe befindliche Bereich einen im Querschnitt kleineren, aber zum Installationskanal formgleichen ausbrechbaren Bereich aufweist.

Hierbei können Kanalteilstücke unterschiedlicher Querschnittsabmessungen miteinander verbunden werden, wobei das Kantenschutzprofil auf das im Querschnitt größere Kanalteilstück aufgesetzt werden kann und das im Querschnitt kleinere Kanalteilstück mit seiner Stirnseite in den entsprechenden formgleichen aber im Querschnitt kleineren Bereich des Kantenschutzprofiles eingesteckt werden kann, sofern dieser Bereich ausgebrochen worden ist. Hierzu sind üblicherweise Sollbruchstellen vorzusehen.
Um zu ermöglichen, daß ein Kantenschutzprofil auch nach der Fertigverlegung von solchen Metallkanälen aufgebracht werden kann, ist vorteilhafterweise vorgesehen, daß das Basisteil -insbesondere mittig- des die Stirnrandkante der Basis des Unterteils des Installationskanals umfassenden Bereiches eine auftrennbare Solltrennstelle aufweist.

Dabei ist vorzugsweise vorgesehen, daß die Solltrennstelle sich von der Außenkante des Basisteiles bis zu dem entfernten oder entfernbaren inneren Bereich des Basisteils erstreckt.

Ein solches mit auftrennbarer Solltrennstelle versehenes Kantenschutzprofil kann an der Solltrennstelle aufgetrennt werden, so daß es unter Verformung über einen entsprechenden Kanal gelegt werden kann, auf die Stoßstelle des Kanales aufgeschoben werden kann (wobei die Kanalteilstücke geringfügig auseinandergedrückt werden müssen), wodurch dann der Kantenschutz auch nachträglich an einer Stoßstelle installiert ist.

Weiterhin kann es im Einzelfall ausreichend sein, daß die innere Stützlippe im Bereich der Basis des Unterteiles ausgespart ist.

Insbesondere dann, wenn es lediglich um die Abdeckung des Schneidgrates geht, ist festzustellen, daß üblicherweise solche Kanalteilstücke durchtrennt werden, indem die Trennsäge oder dergleichen vom Deckel zum Boden hin verfährt. Dabei bildet sich am Deckelteil ein nach innen ragender Schneidgrat und an den Schenkeln des Unterteiles gegebenenfalls ebenfalls ein nach kanalinnenseitig ragender Schneidgrat, während an der Basis des Unterteils ein nach außen abragender Schneidgrad entsteht, der für das später einzulegende Installationsmaterial nicht schädlich ist, so daß es ausreicht, wenn in diesem Bereich lediglich eine äußere Umfassung durch das Kantenschutzprofil erfolgt, im inneren Bereich aber die Stoßstelle an der Basis nicht durch die Stützlippe abgedeckt ist.

Ein Ausführungsbeispiel der Erfindung ist in der Zeichnung dargestellt und im folgenden näher beschrieben.
Es zeigt:
- Fig. 1: eine erste Ausführungsform in isometrischer Darstellung;
- Fig. 2: eine Variante in gleicher Ansicht;
- Fig. 3: die Ausführungsform der Abdeckkappe gemäß Fig. 1 in Ansicht, leicht vergrößert;
- Fig. 4: desgleichen im Schnitt IV-IV der Figur 3 gesehen.

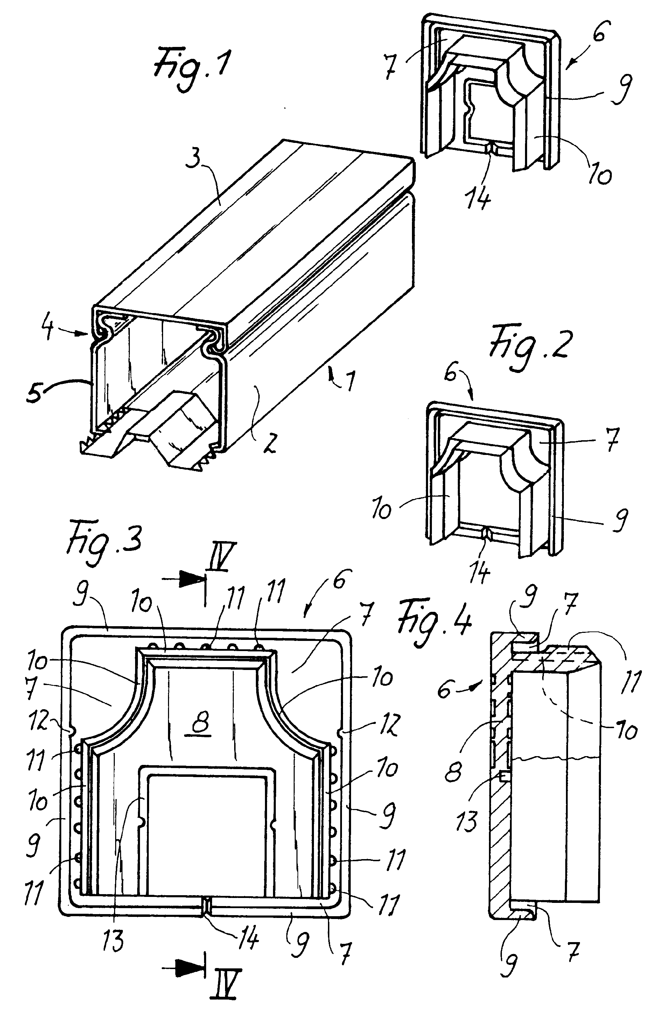

In der Zeichnung Figur 1 ist ein Installationskanal 1 aus Metall zum Schutz von Schläuchen, Leitungen, Kabeln und dergleichen flexiblen Langformgütern gezeigt. Dieser Installationskanal besteht aus einem rinnenförmigen Unterteil 2 und einem auf dieses aufrastbaren Deckelteil 3, wozu die Schenkel des Unterteils 2 und die zu den Schenkeln abgebogenen Randkanten des Deckelteils mit entsprechenden Rastmitteln 4 versehen sind, die in den Innenraum des so gebildeten Installationskanales hineinragen. Im Basisbereich des Installationskanales ist noch ein metallischer Erdverbinder vorgesehen, mittels dessen die aneinandergefügten Kanalteilstücke geerdet werden können.
Die so gebildeten Kanalteilabschnitte des Installationskanales 1 werden üblicherweise auf Stoß verlegt. Insbesondere auf die mittels eines Trennwerkzeuges geschnittene Stoßkante 5 eines Teilabschnittes ist ein Kantenschutzprofil 6 aus Kunststoff aufsteckbar, welches eine mindestens im Bereich des Deckels 3 und der Schenkel des Unterteils 2 umlaufende Einschubnut 7 zur Aufnahme der Randkante des Teilabschnittes aufweist. Diese Einschubnut ist in dem oberen Eckbereich entsprechend der Form der Rastmittel 4 ausgebildet, so daß diese ebenfalls übergriffen und abgedeckt sind. Im unteren Bereich des Kantenschutzprofiles 6 kann die Einschubnut entfallen, da dort üblicherweise der Erdverbinder angeordnet ist, so daß selbst dann, wenn die Basisstirnkante einen Schneidgrat aufweisen sollte, der nach innen ragt, dieser für eingelegte Installationselemente nicht schädlich ist und nicht zu deren Beschädigung führen kann, da dieser Schneidgrat von dem Verbinder abgedeckt ist.

Wie insbesondere aus Figur 3 und 4 ersichtlich, besteht das Kantenschutzprofil 6 aus einem in der Stoßebene des Teilabschnittes des Kanales 1 angeordneten ebenen Basisteil 8, welches eine gering größere Flächenerstreckung aufweist, als der Stirnfläche des Teilabschnittes des Kanales 1 an der Stoßstelle entspricht, wobei am Basisteil 8 umlaufend eine die Wandung des Teilabschnittes an der Stoßstelle von außen übergreifende Lippe 9 angeformt ist und eine Stützlippe 10 gleichgerichtet dazu am Basisteil 8 angeformt ist, die mindestens im Bereich der Seiten und des Oberteils des Basisteiles 8 verläuft, im unteren Bereich gemäß Zeichnungsfiguren aber ausgespart sein kann. Diese Stützlippe 10 ist innenseitig in den Teilabschnitt des Kanales 1 einsetzbar und dessen innerer Kontur folgend geformt, insbesondere im Bereich der Rastmittel 4 des Kanales 1. Zusätzlich sind an der Lippe 9 und an der Stützlippe 10 in den von diesem begrenzten, die Einschubnut 7 bildenden Spalt hineinragende Klemmrippen 11,12 angeformt, die sich parallel zur Aufsteckrichtung des Kantenschutzprofiles 6 erstrecken.
Die Klemmrippen 11 sind im oberen, die Randkante des Deckelteils 3 untergreifendem Bereich und im seitlichen, die Schenkelrandkante des Unterteils 2 untergreifendem Bereich der Stützlippe 10 ausgeformt, wobei der die Rastmittel 4 zwischen Deckel 3 und Unterteil 2 umfassende Bereich frei von solchen Klemmrippen ist. Die Klemmrippen 12 sind an der äußeren umlaufenden Lippe 9 etwa im Bereich der Stoßstelle zwischen Deckel 3 und Unterteil 2 im Bereich der Rastung 4 angeordnet.
Die Klemmrippen 11 sind an einem Bereich der Stützlippe 10 angeformt, der, wie insbesondere aus Figur 4 ersichtlich ist, axial über die axiale Erstreckung der äußeren Lippe 9 in Richtung auf den Innenraum des Kanalprofiles 1 vorsteht. Vorzugsweise sind die freien Enden der die Einschubnut 7 bildenden Lippe 9 und Stützlippe 10 angeschrägt oder gerundet, wie dies ebenfalls aus Figur 4 deutlich ersichtlich ist.

Der zwischen der inneren umlaufenden Stützlippe 10 befindliche Bereich des Basisteils 8 des Kantenschutzprofiles 6 kann vollständig entfernt sein, sofern das Kantenschutzprofil als Durchgangselement für die entsprechenden Installationsleitungen oder dergleichen benutzt wird. Sofern das Kantenschutzprofil als Endstück verwendet wird, kann der entsprechende Bereich des Basisteils 8 vollflächig aus Kunststoff gebildet und ausgefüllt sein. Es ist denkbar, beide Teile separat zu fertigen oder aber die vollflächige Ausbildung mit Sollbruchstellen zu versehen, so daß dieser Bereich ausbrechbar ist, sofern das Kantenschutzprofil als Durchgangselement benutzt werden soll.

Beim Ausführungsbeispiel gemäß Figur 1 und 3 weist der zwischen der inneren umlaufenden Stützlippe 10 befindliche Bereich des Basisteils 8 einen im Querschnitt kleineren, aber zum Installationskanal 1 formgleichen ausbrechbaren Bereich 12 auf, dessen Sollbruchstelle bei 13 gekennzeichnet ist.
Dieses Element dient dazu, an beispielsweise einem Kanal gemäß Figur 1 einen im Querschnitt kleineren Kanal anzuschließen, der dann in die ausgebrochene Öffnung nach Entfernung des Bereiches 12 eingesteckt werden kann. Um auch bei schon fertig verlegten Installationskanälen die nachträgliche Anordnung von Kantenschutzprofilen 6 zu ermöglichen, weist das Basisteil des Kantenschutzprofiles 6 mittig des die Stirnrandkante der Basis des Unterteils 2 des Installationskanales 1 umfassenden Bereiches eine auftrennbare Solltrennstelle 14 auf.
Sofern diese Trennstelle 14 aufgebrochen wird, so ist es möglich, das Kantenschutzprofil aufzuspreizen und über einen schon verlegten Kanalabschnitt zu stülpen, wobei dann durch geringe Längsverschiebung der Kanalteilstücke an der Stoßstelle das Kantenschutzprofil aufgebracht werden kann. Vorzugsweise erstreckt sich die Solltrennstelle 14 von der Außenkante des Basisteiles 8 des Kantenschutzprofiles 6 (unten in den Zeichnungsfiguren) bis zu dem entfernten oder entfernbaren inneren Bereich 12 des Basisteils 8.

## Patentansprüche

1. Installationskanal (1) aus Metall zum Schutz von Schläuchen, Leitungen, Kabeln und dergleichen flexiblen Langformgütern, bestehend aus rinnenförmigen Unterteilen (2) und auf diese aufrastbaren Deckelteilen (3), die den Kanal zu einer rechteckigen, geschlossenen Querschnittsform ergänzen, wobei die aus Unterteil (2) und Deckelteil (3) bestehenden Teilabschnitte auf Stoß verlegt sind, **dadurch gekennzeichnet**, daß auf die Stoßkante eines Teilabschnittes ein Kantenschutzprofil (6) aus Kunststoff aufsteckbar ist, welches eine umlaufende Einschubnut (7) zur Aufnahme der Randkante (5) des Teilabschnittes aufweist.

2. Installationskanal nach Anspruch 1, **dadurch gekennzeichnet**, daß das Kantenschutzprofil (6) aus einem in der Stoßebene des Teilabschnittes angeordneten ebenen Basisteil (8) besteht, welches eine gering größere Flächenerstreckung aufweist als der Stirnfläche des Teilabschnitts an der Stoßstelle entspricht, daß am Basisteil (8) umlaufend eine die Wandung des Teilabschnitts an der Stoßstelle von außen übergreifende Lippe (9) angeformt ist und eine Stützlippe (10) gleichgerichtet dazu am Basisteil (8) angeformt ist, die innenseitig in den Teilabschnitt einsetzbar ist und dessen innerer Kontur folgend geformt ist.

3. Installationskanal nach Anspruch 1 oder 2, **dadurch gekennzeichnet**, daß an mindestens der Lippe (9) oder der Stützlippe (10) in den von diesen begrenzten, die Einschubnut (7) bildenden Spalt hineinragende Klemmrippen (11,12) angeformt sind.

4. Installationskanal nach Anspruch 3, **dadurch gekennzeichnet**, daß die Klemmrippen (11,12) sich parallel zur Aufsteckrichtung des Kantenschutzprofils (6) erstrecken.

5. Installationskanal nach Anspruch 3 oder 4, **dadurch gekennzeichnet**, daß die Klemmrippen (11) im oberen, die Deckelrandkante untergreifenden Bereich und im seitlichen oder auch im unteren die Randkante des Unterteils (2) untergreifenden Bereich ausgebildet sind, jedoch der die Rastung (4) zwischen Deckel (3) und Unterteil (2) umfassende Bereich frei von Klemmrippen (11) ist.

6. Installationskanal nach einem der Ansprüche 3 bis 5, **dadurch gekennzeichnet**, daß die Klemmrippen (11) an einem Bereich der Stützlippe (10) angeformt sind, der axial über die axiale Erstreckung der äußeren Lippe (9) vorsteht.

7. Installationskanal nach einem der Ansprüche 1 bis 6, **dadurch gekennzeichnet**, daß die freien Enden der die Einschubnut (7) bildenden Lippe (9) und Stützlippe (10) angeschrägt oder gerundet sind.

8. Installationskanal nach einem der Ansprüche 1 bis 7, **dadurch gekennzeichnet**, daß der zwischen der inneren umlaufenden Stützlippe (9) befindliche Bereich des Basisteils (8) des Kantenschutzprofils (6) entfernt oder entfernbar ist.

9. Installationskanal nach einem der Ansprüche 1 bis 8, **dadurch gekennzeichnet**, daß der zwischen der inneren umlaufenden Stützlippe (9) befindliche Bereich einen im Querschnitt kleineren, aber zum Installationskanal formgleichen ausbrechbaren Bereich (12) aufweist.

10. Installationskanal nach einem der Ansprüche 1 bis 9, **dadurch gekennzeichnet**, daß das Basisteil (8) -insbesondere mittig- des die Stirnrandkante der Basis des Unterteils (2) des Installationskanals (1) umfassenden Bereiches eine auftrennbare Solltrennstelle (14) aufweist.

11. Installationskanal nach Anspruch 10, **dadurch gekennzeichnet**, daß die Solltrennstelle (14) sich von der Außenkante des Basisteils (8) bis zu dem entfernten oder entfernbaren inneren Bereich (12) des Basisteils (8) erstreckt.

12. Installationskanal nach einem der Ansprüche 1 bis 11, **dadurch gekennzeichnet**, daß die innere Stützlippe (10) im Bereich der Basis des Unterteils (2) ausgespart ist.

## Claims

1. A metallic installation duct (1) for protecting hoses, lines, cables and similar flexible elongate elements, consisting of channel-shaped lower parts (2) and cover parts (3) which can be latched thereon, which complete the duct into a rectangular, closed cross-sectional shape, with the component sections consisting of lower part (2) and cover part (3) being joined by thrust,
**characterised in that** on the thrust edge of one component section there is placable a plastic edge protection profile (6), which has a circumferential insertion groove (7) for receiving the edge (5) of the component section.

2. An installation duct according to Claim 1,
**characterised in that** the edge protection profile (6) consists of a plane base part (8) disposed in the thrust plane of the component section, and has a slightly larger planar extent than corresponds to the end face of the component section at the point of thust,
**in that** at the circumference of the base part (8) is moulded a lip (9) engaging the wall of the component section at the point of thrust from the outside and a support lip (10) is moulded parallel thereto onto the base part (8), which can be inserted into the component section on the inside and is shaped to follow its inner contour.

3. An installation duct according to Claim 1 or 2,
**characterised in that** onto at least the lip (9) or the support lip (10) are moulded clamping ribs (11,12), which protrude into the gap, limited thereby, forming the insertion groove (7).

4. An installation duct according to Claim 3,
**characterised in that** the clamping ribs (11, 12) extend parallel to the insertion direction of the edge protection profile (6).

5. An installation duct according to Claim 3 or 4,
**characterised in that** the clamping ribs (11) are constructed in the upper region engaging under the cover edge and in the lateral region or also in the lower region engaging under the edge of the lower part (2), but the region comprising the catch (4) between cover (3) and lower part (2) is free from clamping ribs (11).

6. An installation duct according to one of Claims 3 to 5,
**characterised in that** the clamping ribs (11) are moulded onto a region of the support lip (10) which axially protrudes beyond the axial extension of the outer lip (9).

7. An installation duct according to one of Claims 1 to 6,
**characterised in that** the free ends of the lip (9) and support lip (10) forming the insertion groove (7) are bevelled or rounded.

8. An installation duct according to one of Claims 1 to 7,
**characterised in that** the region of the base part (8) of the edge protection profile (6) located between the inner circumferential support lip (9) is removed or can be removed.

9. An installation duct according to one of Claims 1 to 8,
**characterised in that** the region located between the inner circumferential support lip (9) has a breakable region (12) with a smaller cross section but with the same shape as the installation duct.

10. An installation duct according to one of Claims 1 to 9,
**characterised in that** the base part (8) - in particular the centre - of the region comprising the end edge of the base of the lower part (2) of the installation duct (1) has a separable predetermined separation point (14).

11. An installation duct according to Claim 10,
**characterised in that** the predetermined separation point (14) extends from the outer edge of the base part (8) to the removed or removable inner region (12) of the base part (8).

12. An installation duct according to one of Claims 1 to 11,
**characterised in that** the inner support lip (10) has a recess in the region of the base of the lower part (2).

## Revendications

1. Canal d'installation (1) en métal pour protéger des tuyaux souples, canalisations, câbles et autres éléments flexibles similaires de forme allongée, constitué de parties inférieures (2) en forme de rigole et de parties de couvercle (3) pouvant être enclenchées sur ces dernières, qui complètent le canal en une forme de section rectangulaire fermée, les tronçons de canal constitués d'une partie inférieure (2) et d'une partie de couvercle (3) étant posés en aboutement, **caractérisé** en ce qu'un profilé de protection de bord (6) en matière plastique peut être emboîté sur le bord d'aboutement d'un tronçon de canal, profilé qui présente une rainure d'insertion (7) qui en fait le tour et est destinée à recevoir l'arête de bord (5) du tronçon de canal.

2. Canal d'installation selon la revendication 1, **caractérisé** en ce que le profilé de protection de bord (6) est constitué d'une partie de base plane (8), disposée dans le plan d'aboutement du tronçon de canal et présentant une superficie légèrement supérieure à celle correspondant à la face frontale du tronçon de canal au point d'aboutement, et en ce qu'une lèvre (9), recouvrant extérieurement la paroi du tronçon de canal au point d'aboutement, est formée sur la partie de base (8) en en faisant le tour, et une lèvre de soutien (10) est formée sur la partie de base (8) en étant dirigée dans la même direction que la lèvre (9), et elle peut être insérée intérieurement dans le tronçon de canal et est configurée conformément au contour intérieur de ce dernier.

3. Canal d'installation selon la revendication 1 ou 2, **caractérisé** en ce que des nervures de serrage (11, 12) sont formées sur au moins la lèvre (9) ou la lèvre de soutien (10) et pénètrent dans l'interstice délimité par ces lèvres et formant la rainure d'insertion (7).

4. Canal d'installation selon la revendication 3, **caractérisé** en ce que les nervures de serrage (11, 12) s'étendent parallèlement à la direction d'emboîtement du profilé de protection de bord (6).

5. Canal d'installation selon la revendication 3 ou 4, **caractérisé** en ce que les nervures de serrage (11) sont formées dans la région supérieure s'engageant sous l'arête de bord du couvercle et dans la région latérale ou encore dans la région inférieure s'engageant sous l'arête de bord de la partie inférieure (2), mais la région recouvrant l'assemblage par enclenchement (4) entre le couvercle (3) et la partie inférieure (2) est dépourvue de nervures de serrage (11).

6. Canal d'installation selon l'une des revendications 3 à 5, **caractérisé** en ce que les nervures de serrage (11) sont formées sur une région de la lèvre de soutien (10) qui dépasse axialement de l'étendue axiale de la lèvre extérieure (9).

7. Canal d'installation selon l'une des revendications 1 à 6, **caractérisé** en ce que les extrémités libres de la lèvre (9) et de la lèvre de soutien (10) formant la rainure d'insertion (7) sont biseautées ou arrondies.

8. Canal d'installation selon l'une des revendications 1 à 7, **caractérisé** en ce que la région de la partie de base (8) du profilé de protection de bord (6) qui se trouve à l'intérieur de la lèvre de soutien entourante intérieure (10) est enlevée ou peut être enlevée.

9. Canal d'installation selon l'une des revendications 1 à 8, **caractérisé** en ce que la région qui se trouve à l'intérieur de la lèvre de soutien entourante intérieure (10) présente une région partielle (12) pouvant être enlevée par brisure, de même forme que le canal d'installation mais de section plus petite.

10. Canal d'installation selon l'une des revendications 1 à 9, **caractérisé** en ce que la partie de base (8) présente un point de séparation privilégiée (14), pouvant être ouvert, dans la région qui recouvre l'arête de bord frontal de la base de la partie inférieure (2) du canal d'installation (1), et notamment au milieu de cette région.

11. Canal d'installation selon la revendication 10, **caractérisé** en ce que le point de séparation privilégiée (14) s'étend depuis le bord extérieur de la partie de base (8) jusqu'à la région partielle intérieure (12) de la partie de base (8) qui est enlevée ou qui peut être enlevée.

12. Canal d'installation selon l'une des revendications 1 à 11, **caractérisé** en ce que la lèvre de soutien intérieure (10) est évidée dans la région de la base de la partie inférieure (2).
